# EUROPEAN PATENT SPECIFICATION

(11) **EP 4 432 323 B1**
(45) Date of publication and mention of the grant of the patent: **03.12.2025**
(21) Application number: 24162507.8
(22) Date of filing: 08.03.2024
(51) Int. Cl.: H01H 31/00

(54) **DISCONNECTOR AND EARTHING SWITCH WITH TELESCOPIC CONTACT**
TRENNSCHALTER UND ERDUNGSSCHALTER MIT TELESKOPISCHEM KONTAKT
SECTIONNEUR ET INTERRUPTEUR DE MISE À LA TERRE À CONTACT TÉLESCOPIQUE

(30) Priority: 14.03.2023 IN 202311016938; 02.05.2023 GB 202306482
(43) Date of publication of application: 18.09.2024
(73) Proprietor: Eaton Intelligent Power Limited, Dublin 4 (IE)
(72) Inventor: WAGHMORE, Minal, Ichalkaranji (IN); KONA, Kaushik, Pune (IN); SOLASE, Rushikesh, Sangola (IN); PAWAR, Vishal, Pune (IN); PINGLE, Mangesh, Pune (IN)
(74) Representative: Collingwood-Pierce, Alexandra Isobel Seymour

(56) References cited:
- EP-A1- 3 288 050
- CN-A- 115 332 987
- US-A1- 2017 236 657

## Description

### Field

The present application relates to an earthing disconnection switch (also called herein a disconnector and earthing switch). In particular, the present application relates to an earthing disconnection switch having a telescopic or retractable contact. In some implementations, a three-position earthing disconnection switch (or three position disconnector and earthing switch, 3PS) can be provided within a compact footprint by way of said retractable contact.

### Background

Switchgears and other switching devices are used to control and protect electrical equipment, such as equipment operated by utilities, commercial building owners, and operators of distributed renewable generation assets such as solar farms and wind turbines. Such switchgears include various medium voltage devices (e.g., devices rated for 12kV or 24kV) for a range of applications, such as a ring main unit (RMU).

For any given equipment specification or application, it is desirable to provide a reliable and compact switchgear with a small footprint. It is also desirable to provide an earthing disconnection switch (or disconnector and earthing switch) with three positions - on, off (or isolation), and earth - to facilitate in-situ testing of cable integrity and improve the ease of maintenance of the switchgear. It is particularly desirable to combine such a three-position disconnector and earthing switch or 3PS with a compact switchgear or switching device.

Document EP 3288050A1 discloses a potential transformer isolating device which comprises a swinging rod, a guide pole, and a compression device. The guide pole has a guide-pole guide end and an arc-shaped guide-pole connecting end. When the guide-pole connecting end is under the action of the external force, the guide pole can move along the swinging rod, and the compression device is compressed. When the external force is removed, the guide pole can be reset under the action force of the compression device.

### Summary

The matter for protection is set out in the appended claims.

Disclosed herein is a device comprising: one or more switching mechanisms configured to disconnect a power supply from a load; and one or more disconnector and earthing switches, each disconnector and earthing switch associated with a respective switching mechanism. Each disconnector and earthing switch comprising a telescopic disconnector blade having a first end and a second end, wherein the disconnector blade is configured to pivot around the first end between three different positions. The three positions comprise: a first position in which the disconnector and earthing switch is closed and the power supply is connected to the load through the disconnector blade; a second, isolation, position in which the disconnector and earthing switch is open and the power supply is disconnected from the load; and a third position in which the power supply is disconnected from the load and a second end of the disconnector blade is electrically connected to an earthing contact. Such a disconnector and earthing switch (also termed an earthing disconnection switch) can be termed a 3PS switch (three position disconnector and earthing switch).

The use of a disconnector and earthing switch with a telescopic or retractable contact (or disconnector blade) can facilitate provision of a reliable device with a small footprint and improved dielectric performance, which device can more easily and safely tested in-situ (thereby e.g., improve the ease of maintenance). For example, a 3PS can be provided within a small footprint, which can lead to smaller device architecture.

In some examples, the telescopic disconnector blade comprises an outer contact and an inner contact, a portion of the inner contact arranged to slide within the outer contact. Optionally, the outer contact comprises the first end of the disconnector blade and the inner contact comprises the second end of the disconnector blade. Optionally, the outer contact comprises a guide hole and the inner contact slides within the guide hole, the disconnector blade further comprising a compliant member disposed within the guide hole and configured to bias the inner contact out of the guide hole. Optionally, in response to an external force applied in a first direction and to the second end of the disconnector blade, the inner contact is configured to slide in the first direction within the guide hole of the outer contact and the compliant member is configured to bias the inner contact in a direction opposite the first direction. Optionally, the compliant member is a compression spring. Any other suitable compliant member can be used. The compliant member can be compliant through form and/or material.

In some examples, the telescopic disconnector blade is configured to move between an extended state and a compressed state, wherein the disconnector blade is in the extended state in the first position and the third position, and wherein the disconnector blade is in the compressed state in the second position.

The device further comprises a housing having first and second side walls, wherein the telescopic disconnector blade is configured to rotate around the pivot from the first position to the second position, wherein the rotation is towards the second side wall of the housing. The use of a telescopic or retractable blade as described herein can help maintain adequate between the second side wall and the tip or second end of the disconnector blade; this can help to reduce field intensity at the end of the blade and thereby help reduce or avoid the risk of dielectric failure between the housing and the blade.

The second side wall comprises an insulating support configured to contact, when the disconnector blade is in the second position, the second end of said disconnector blade. The presence of the insulating support can act as an obstruction to help breakdown electrical current paths, and thereby help avoid dielectric failure by improving dielectric performance.

Optionally, the insulating support comprises a guide portion configured to cause the disconnector blade to move from the extended state to the compressed state as the disconnector blade pivots from the first position to the second position. Optionally, the guide portion is further configured to cause the disconnector blade to move from the compressed state to the extended state as the disconnector blade pivots from the second position to the third position.

In some examples, there is an electrical contact coupled to the insulating support, the electrical contact configured to contact the second end of the disconnector blade when the disconnector blade is in the second position. Optionally, the electrical contact comprises a partially spherical end configured to co ntact the second end of the disconnector blade when the disconnector blade is in the second position. The use of a spherical end can help to reduce field end effects.

In some implementations, each disconnector and earthing switch comprises two or more telescopic disconnector blades. By using two disconnector blades, two parallel paths are created for current flow. This can help to improve thermal performance. In other examples, each disconnector and earthing switch comprises a single telescopic disconnector blade.

Optionally, the device comprises a vacuum circuit breaker. Optionally, the one or more switching mechanisms comprise a vacuum interrupter.

In some examples, the device comprises a plurality of switching devices, each switching device comprising a plurality of poles, wherein each pole is associated with a respective switching mechanism of the one or more switching mechanisms and a respective disconnector and earthing switch of the one or more disconnector and earthing switches. A more compact device architecture may be facilitated by the use of the telescopic or retractable blade described herein.

In some implementations, the telescopic disconnector blade comprises an outer contact and a plurality of contacts, a portion of a first inner contact arranged to slide within the outer contact and a portion of a second first inner arranged to slide within the first inner contact.

In some other implementations, the telescopic disconnector blade comprises an outer contact and an inner contact, a portion of the outer contact arranged to slide over the inner contact. The inner contact comprises the first end of the disconnector blade. The outer contact comprises the second end of the disconnector blade.

In some implementations, the telescopic disconnector blade comprises an outer contact and a plurality of inner contacts, a portion of the outer contact arranged to slide over a first inner contact, and a portion of the first inner contact arranged to slide over a second inner contact. The outer contact comprises the second end of the disconnector blade.

A method of operating an disconnector and earthing switch (or disconnection earthing switch) comprising a telescopic disconnector blade having a first end and a second end, wherein the disconnector blade is configured to pivot around the first end between three different positions. The method comprises pivoting the disconnector blade about the first end from a first position, in which the disconnector and earthing switch is closed and the power supply is connected to the load through the disconnector blade, to a second position, wherein the second position is an isolation position in which the disconnector and earthing switch is open and the power supply is disconnected from the load. The method further comprises pivoting the disconnector blade about the first end from the second position to a third position in which the power supply is disconnected from the load and a second end of the disconnector blade is electrically connected to an earthing contact.

In some examples, the disconnector and earthing switch is a 3PS switch (three position disconnector and earthing switch).

The method can further comprise compressing the disconnector blade as it pivots from the first position to the second position. The method can further comprise extending the disconnector blade as the disconnector blade pivots from the second position to the third position.

Also disclosed herein is a device comprising: one or more switching mechanisms configured to disconnect a power supply from a load; and one or more disconnector and earthing switches, each disconnector and earthing switch associated with a respective switching mechanism. Each disconnector and earthing switch comprising a telescopic disconnector blade having a first end and a second end, wherein the disconnector blade is configured to pivot around the first end between two or more different positions. The two or more positions comprise: a first position in which the disconnector and earthing switch is closed and the power supply is connected to the load through the disconnector blade; and a second position in which the power supply is disconnected from the load and a second end of the disconnector blade is electrically connected to an earthing contact. This can be implemented as a two position earthing disconnection switch.

In some implementations, each disconnector and earthing switch comprises two or more telescopic disconnector blades.

In some examples, the two or more positions further comprise a third, isolation, position in which the disconnector and earthing switch is open and the power supply is disconnected from the load. In some examples, the disconnector and earthing switch (also called an earthing disconnection switch) is a 3PS switch.

Also disclosed herein is a switching device configured to disconnect a power supply from a load, the switching device comprising a telescopic disconnector blade having a first end and a second end, wherein the disconnector blade is configured to pivot around the first end between two or more different positions. The two or more positions comprise: a first position in which the power supply is connected to the load through the disconnector blade; and a second position in which the power supply is disconnected from the load. In the second position, a second end of the disconnector blade can optionally be electrically connected to an earthing contact.

### List of Figures

The following description is with reference to the Figures.
Figure 1 shows a front view of an example device having one or more switching mechanisms and one or more disconnector and earthing switches, as described herein.
Figure 2: Figure 2A shows a front view of an illustrative disconnector and earthing switch in a first, on, position; Figure 2B shows a front view of the illustrative disconnector and earthing switch in a second, off or isolation, position; and Figure 2C shows a front view of the illustrative disconnector and earthing switch in a third, earth, position.
Figure 3: Figure 3A shows a perspective view of breakdown paths in an illustrative disconnector and earthing switch; and Figure 3B shows a front view of an illustrative disconnector and earthing switch clearance, illustrating clearance between the switch and a housing.
Figure 4: Figure 4A illustrates an example telescope or retractable blade in a first, extended or uncompressed position; and Figure 4B illustrates the blade of Figure 4A in a second, compressed position.
Figure 5: Figure 5A shows a front view of an exemplary disconnector and earthing switch having a telescopic blade in the first, on, position; Figure 5B shows a front view of the exemplary disconnector and earthing switch in the second, off or isolation, position (with a compressed telescopic blade); and Figure 5C shows a front view of the exemplary disconnector and earthing switch in the third, earth, position.
Figure 6: Figure 6A shows a perspective view of an insulating support, and Figure 6B shows a perspective view of the insulating support in combination with an exemplary disconnector and earthing switch.
Figure 7A and Figure 7B are schematic illustrations of other exemplary telescopic blades.

### Detailed description

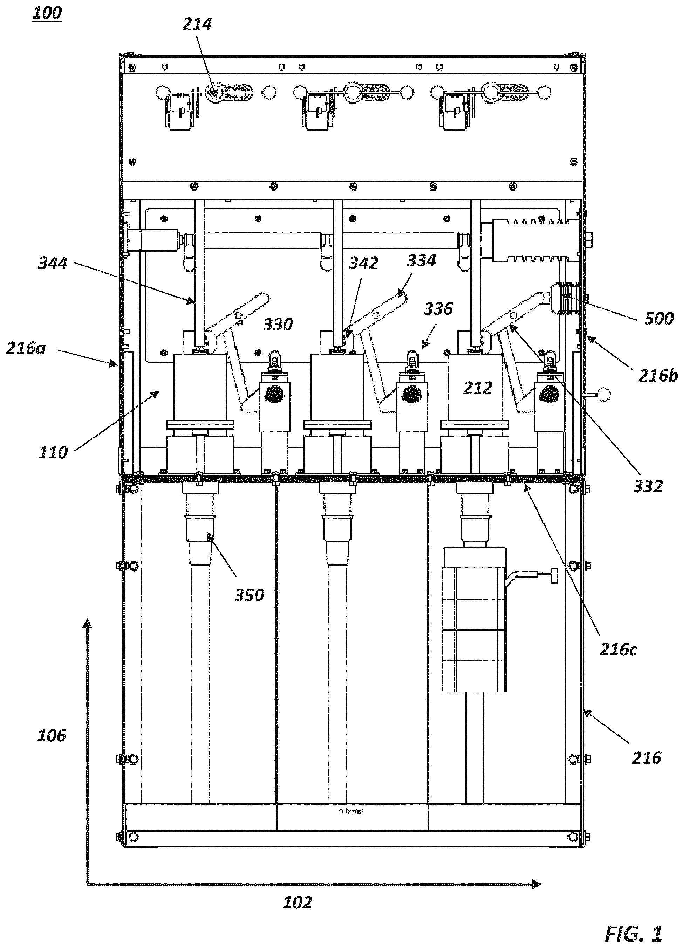

With reference to Figure 1, a device 100 comprising one or more switching mechanisms 110 configured to disconnect a power supply from a load and one or more corresponding disconnector and earthing switches 330 is described. Each disconnector and earthing switch is associated with a respective switching mechanism. In the examples described herein, the disconnector and earthing switch is a 3PS switch (three position disconnector and earthing switch), but it will be understood that the principles of the telescopic blade can be applied to other earthing disconnection switches (e.g. a two position earthing disconnection switch) and to other switch types more generally.

Device 100 may be a switchgear or any other switching or disconnection device. The device can comprise a circuit breaker, optionally a vacuum circuit breaker VCB, or a load break switch, for example. In some examples, device 100 may comprise a plurality of switching devices, each switching device comprising a plurality of poles. For example, device 100 may be a three-way, three-Pole device. Each pole can be associated with a respective switching mechanism of the one or more switching mechanisms and associated with a respective disconnector and earthing switch of the one or more disconnector and earthing switches. Each of the plurality of switching devices may be optionally implemented as e.g. a vacuum circuit breaker VCB or a load break switch, for example. In the following examples, three switching mechanisms 110 are shown, but any suitable number of switching mechanisms (of any suitable type, e.g., mechanical, electromechanical and/or solid state) may be used.

The switching mechanisms are provided within a housing 216. The housing has a first side wall 216a and a second side wall 216b and a bottom plate 216c. The switching mechanisms shown here are arranged along a first axis 102 between the first and second side walls 216a, 216b of housing 216.

With further reference to Figure 1, each disconnector and earthing switch has a disconnector blade 332 which is pivotably connected, at a first end 342, to the associated switching mechanism. The disconnector blade 332 is the disconnector and earthing switch contact, which facilitates electrical connection of the load to the power supply via the disconnector and earthing switch. In the example of Figure 1, the first end 342 of the disconnector blade (or contact) is pivotably connected or coupled to a top of a housing enclosing the switching mechanism. The disconnector blade 332 also comprises a second end 334 opposite the first end.

In some examples, each switching mechanism has a fixed contact and a moveable contact, and an actuating mechanism comprising a shaft 214 (extending into the page, here perpendicular to axis 102) and drive rod 344. The shaft is configured to rotate (here around a rotation axis arranged perpendicular to the first axis 102) to transfer an external input force to move the moveable contact and open or close the switching mechanism. The drive rod 344 is connected to the shaft 214 to transfer the rotation of the shaft 214 in response to an external input force into movement of the moveable contact along a second axis 106 perpendicular to the first axis. The second axis is also referred to herein as the operating axis. The moveable contact is moveable by the drive rod 344 of the actuating mechanism and is arranged between the fixed contact and the shaft 214 of the actuating mechanism. Each disconnector and earthing switch 330 is arranged between the active part of the switching mechanism 110 (here the moving and fixed contacts) and the shaft 214 along the second axis 106.

In some particular examples, the switching mechanism 110 is implemented as, or comprises, a vacuum interrupter (or VI). The VI can be implemented as part of a VCB or other circuit breaker, or as part of any other type of switching device (such as a load break switch or LBS). The top contact of the vacuum interrupter VI is the moveable contact, moveable by the actuating mechanism is response to rotation of the shaft 214. With reference to Figure 1, the fixed contact of the vacuum interrupter VI is fixed to the bottom plate 216c of the housing 216 via a support plate (not shown). The bottom plate 216c and first and second sidewalls 216a, 216b at least partially define a switching compartment of the switchgear 100, 200. The switching compartment described herein is air insulated, however any other insulating medium which fulfils the required dielectric / thermal requirements (such as a vacuum, pressurised air, SF6 (sulphur hexafluoride) or other gaseous dielectric medium, or inert gas) may be provided within the switching compartment.

A housing of the VI covers the fixed and moving contacts and is bolted to the support plate. Column supports formed of an insulating material (not shown) can be bolted between the support plate and the bottom plate 216c to hold the support plate within the switching compartment of the housing 216. In this particular example, the VI is mounted on a bushing 350. The bushing 350 is bolted to the bottom plate 216c and is fixed to the support plate with epoxy.

The VI housing here acts as a support for the hinge or pivot point at the first end 342 of the disconnector blade 332. The first end of each disconnector blade is pivotably coupled to the switching mechanism 110. The first end of the disconnector blade 342 can be pivotably coupled to the switching mechanism between the moveable contact and the shaft 214. In this particular example, the first end of the disconnector blade 342 is pivotably coupled to a top of the VI housing which surrounds the fixed and moveable contacts of the switching mechanism 110.

A metallic shield (not shown) can be provided within the VI housing, placed between the moveable contact and the first end of the disconnector blade. The metallic shield acts to help shield the disconnector blade and the hinge/pivotable coupling from any electric field within the vacuum interrupter. As discussed above, the moving contact moves within the VI housing in response to actuation/rotation of the shaft 214. In particular, rotation of the shaft 214 actuates the drive rod 344 of the actuating mechanism, pulling the moveable contact along the operating axis towards the shaft 214 and opening the switch 212.

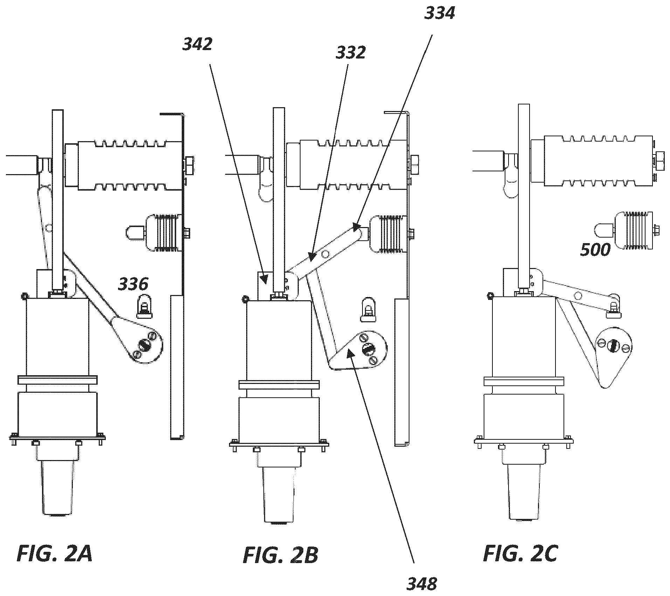

The disconnector blade of each disconnector and earthing switch 330 is arranged to pivot around the first end to move between three different positions, as is further illustrated in Figure 2.

With reference to Figure 2A, the disconnector blade 332 is arranged in a first position in which in which the disconnector and earthing switch is closed and the power supply is connected to the load through the disconnector blade. In this first position, current flows through the device 100 via the switching mechanism 110 and the disconnector blade 332.

In response to user actuation of a direct break mechanism (not shown), the disconnector blade is moved from the first position to a second position, which is shown in Figure 2B. The direct break mechanism comprises a second shaft and a second actuating mechanism which is operated by rotation of the second shaft. A user can rotate the second shaft by turning or rotating an external handle, and the second actuating mechanism is rotated in response to rotation of the shaft. In this example, the second actuating mechanism is a four-bar crank rocker mechanism 348, but any suitable actuating/driving mechanism may be used. In particular, in response to rotation of the second shaft of the direct break mechanism, the disconnector blade is configured to rotate around the pivot from the first position to the second position, wherein the rotation is towards the second side wall 216b of the housing.

In the second position of Figure 2B, the disconnector and earthing switch is open and the power supply is disconnected from the load (the current path between the load and the power supply through the disconnector blade 332 is broken). This second, intermediate position is an isolation position in which the disconnector and earthing switch is "off". The disconnector blade 332 can be moved into this "off" or isolation position without a corresponding actuation of the switching mechanisms 110 (i.e., independent of rotation of the shaft 214) in some implementations. However, in other implementations this operation is dependent on the position of the switching mechanism 110. For example, where the disconnector and earthing switch is an off load 3PS arranged in series with the switching mechanism, the off load 3PS switch can only be operated when the switching mechanism (optionally a VCB) is in an open state. This can be achieved by way of interlock / interlocking mechanisms: the 3PS direct break mechanism will interlock with the switching mechanism to ensure the device is operated as per mechanical interlock requirements.

In response to further user actuation of the second shaft of the direct break mechanism in the same direction of rotation, the disconnector blade is moved from the second position to a third position, which is shown in Figure 2C. In particular, the disconnector blade is configured to rotate around the pivot from the second position to the third position, wherein the rotation is again towards the second side wall 216b of the housing. In the third position, the power supply is disconnected from the load and a second end 334 of the disconnector blade is electrically connected to an earthing contact 336. The disconnector blade 332 can be moved into this earthed position without a corresponding actuation of the switching mechanisms 110 (i.e., independent of rotation of the shaft 214) in some implementations. However, in other implementations, as discussed above, this operation is dependent on the position of the switching mechanism 110. For example, where the disconnector and earthing switch is an off load 3PS arranged in series with the switching mechanism, the off load 3PS switch can only be operated when the switching mechanism (optionally a VCB) is in the open state.

The disconnector and earthing switch 330 can thus be activated or controlled independently of the shaft 214 which controls or actuates the moving contact of the switches. In the example described above, the disconnector blade 332 is coupled to a fixed component (e.g., the housing of the VI) and is therefore decoupled from the actuation of the switching mechanism 110; in other words, actuation of the device 100 via shaft 214 does not actuate the disconnector and earthing switch 330. However, it will be understood that in other examples the second actuating mechanism (of the disconnector and earthing switch) can be configured such that, when the moving contact is opened by shaft 214 to disconnect the power supply from the load, the disconnector blade 332 of the disconnector and earthing switch is correspondingly moved to the third, earthed, position. In this way, the current path through each switching mechanism 110 is automatically opened in two different locations when the switching mechanism is opened. In other examples, interlock mechanisms can prevent actuation of the direct break mechanism if the switching device is open.

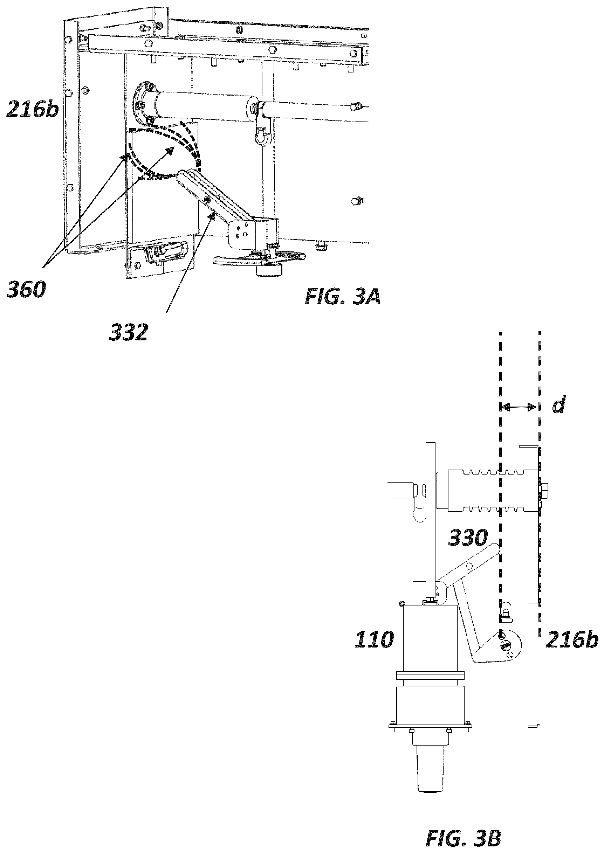

As discussed above, device 100 comprises a three-position disconnector and earthing switch 330. It is desirable to provide a disconnector and earthing switch with three positions - on, off (or isolation), and earth - to facilitate in-situ testing of cable integrity and improve the ease of maintenance of the switchgear. It is particularly desirable to combine a three-position disconnector and earthing switch with a compact switchgear, as is discussed below with reference to Figure 3.

It will be recognised that the device housing 216 (also termed enclosure) is always at ground potential (earthed). In the third position the disconnector plate is also earthed, but in the second, "off" or isolated, position the disconnector blade 332 is at a live potential. As per IEC62271 standard for metal-enclosed switchgear, an "off" position isolation test should be conducted at 85kVp (or 85 Kilovoltage peak) impulse voltage and 32kV power frequency withstand voltage (maximum rms value of voltage that the device can withstand permanently). However, since the disconnector blade tip (otherwise referred to as the second end 334) is free in air when in the second position, end effects lead to a high intensity electric field being generated at the second end of the disconnector blade 332. This can lead to dielectric failure of the system and the formation of electric breakdown paths 360 between the disconnector blade 332 and the second side wall 216b of the device 100 (as shown in Figure 3A).

It is therefore desirable that the field intensity should be reduced, and adequate clearance d should be maintained to between the second side wall 216b and the tip or second end 334 of the disconnector blade (see Figure 3B) to avoid such dielectric failure between the housing or enclosure 216. Directly increasing the clearance d by moving the side wall 216b away from the switching mechanism 110 and disconnector and earthing switch 330 will increase the overall dimensions of the device 100, hindering the provision of a compact device 100. It is therefore desirable to increase clearance d and achieve better dielectric performance within a compact device footprint in order to provide a reliable device with a small footprint which can be provided which can more easily and safely tested in-situ (thereby e.g., improve the ease of maintenance).

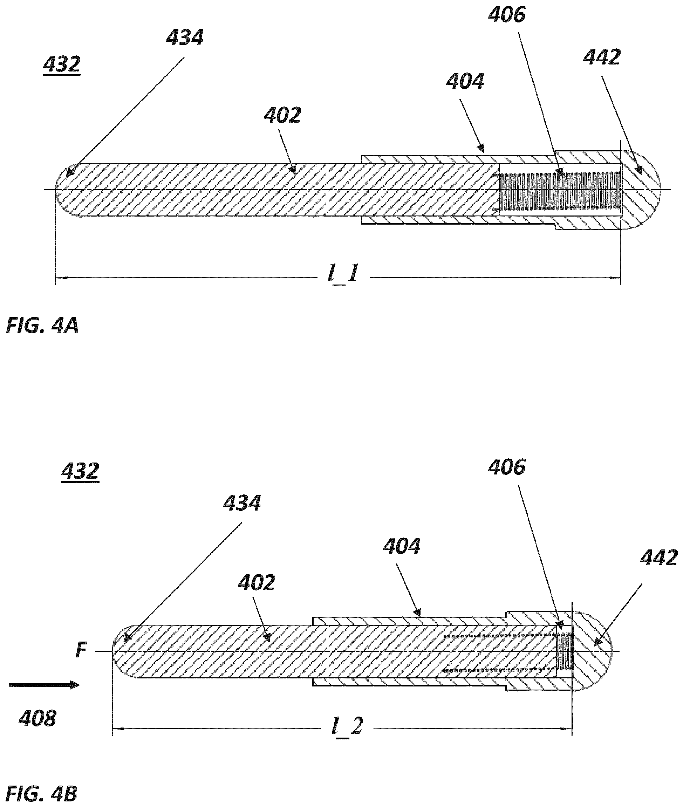

With reference to Figure 4, a telescopic or retractable contact / disconnector blade 432 is described that can help achieve some of the above advantages. The telescopic contact or blade 432 is configured to move between an extended state, shown in Figure 4A, and a compressed or retracted state, shown in Figure 4B. Any suitable arrangement of telescopic or retractable blade can be provided. The telescopic blade 432 is a particular embodiment of the disconnector blade 332 described above.

With particular reference to the example of Figure 4, the telescopic disconnector blade 332, 432 comprises an outer contact 404 and an inner contact 402, a portion of the inner contact arranged to slide within the outer contact. These features of the blade 332, 432 are referred to as "contacts" because they are electrically connecting (to facilitate connection of the supply to the load via the disconnector and earthing switch 330). In other words, the inner contact 402 can be inserted into the outer contact 404 and can slide relative to the outer contact. The outer contact comprises the first end 342, 442 of the disconnector blade (the end around which the disconnector blade is configured to pivot. The inner contact comprises the second end 334, 434 of the disconnector blade (the free end, or tip).

With further reference to Figure 4A, the outer contact 404 comprises a guide hole and the inner contact 402 slides within the guide hole. The disconnector blade further comprises a compliant member 406 disposed within the guide hole and configured to bias the inner contact 402 out of the guide hole. In other words, the inner contact can be configured to retract into the outer contact, and the complaint member acts to counter the retraction. The compliant member 406 of Figure 4 is shown as a compression spring, but any other compliant member may be used. The compliant member can be compliant through form and/or material.

As shown in Figure 4B, in response to an external force F applied in a first direction 408 and to the second end 434 of the disconnector blade 432, the inner contact 402 is configured to slide in the first direction 408 within the guide hole of the outer contact 404. The compliant member compresses in response to the movement of the inner contact in the first direction 408. The compressed compliant member is then configured to urge the inner contact 404 away from the outer contact in a direction opposite the first direction. In this way, the disconnector blade 432 can be in the extended state of Figure 4A in the absence of a force F. The disconnector blade is configured to move into the compressed state of Figure 4B in response to an external force. From the compressed state, the disconnector blade is configured to move back to the extended state of Figure 4A by way of the biasing or urging of the compliant member 406.

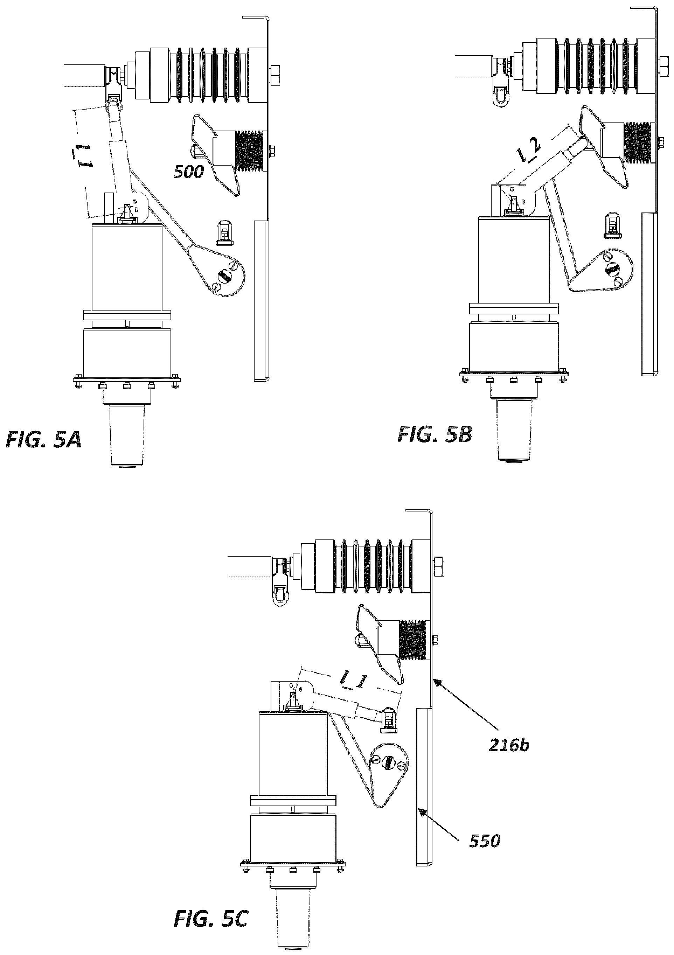

With further reference to Figure 5, the disconnector blade 432 is in the extended state in the first position and the third position (of Figures 2A, 5A and Figures 2C, 5C, respectively), and the disconnector blade 432 is in the compressed state in the second position (of Figures 2B, 5B). In particular, as can be seen in Figures 4 and 5, in the first "on" position and the third "earthed" position, the disconnector blade 432 is in the extended state and has an overall length of *l_1*. In contrast, in the second "off" position, the disconnector blade 432 is in the compressed (or retracted) state and has an overall length of *l_2*. The particular lengths l_1 and l_2 can be determined by the device size and application requirements, and the stiffness of the compliant member 406, but L_2 is less than l_1. In this way, a greater clearance d can be provided for "off" or isolation tests, without increasing the overall footprint of the device 100. A reliable device with a small footprint and improved dielectric performance can therefore be provided by use of an disconnector and earthing switch with a telescopic or retractable contact (or disconnector blade), which device can more easily and safely tested in-situ (thereby e.g., improve the ease of maintenance). It will be understood that the telescope blade described herein can also be used with any other form of disconnection and/or earthing switch.

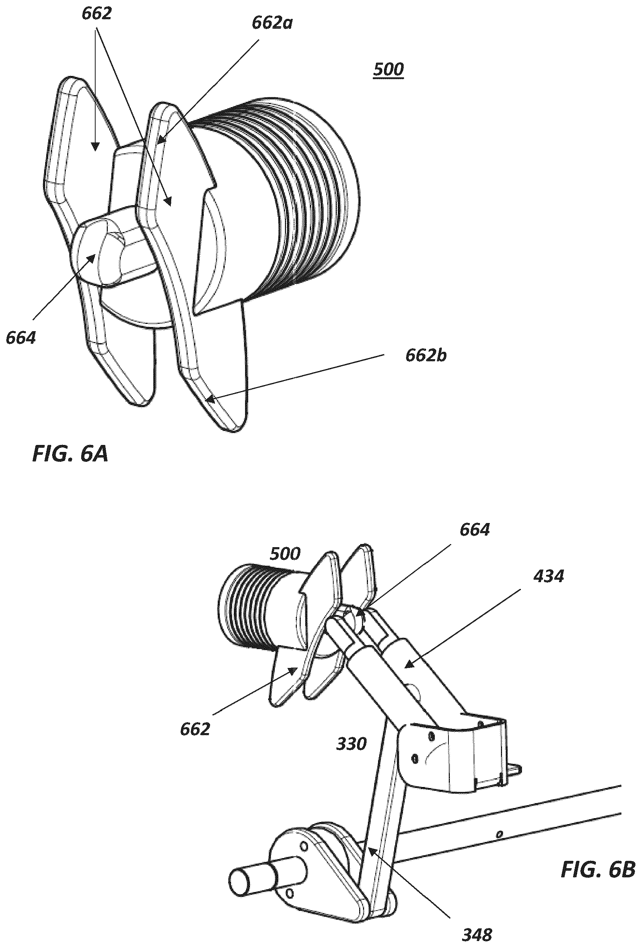

As is also shown in Figure 5, the second side wall 216b can further comprise an insulating support 500 configured to contact, when the disconnector blade is in the second position (with length *l_2*), the second end 434 of the retracted / compressed disconnector blade 432. This insulating support 500 is discussed further in Figure 6 (Figures 6A, 6B).

With reference to Figure 6A, the insulating support 500 comprises an insulating guide portion 662 configured to cause the disconnector blade 432 to move from the extended state to the compressed state as the disconnector blade pivots from the first position to the second position. A section 662a of the guide portion 662 is shaped to gradually decrease the distance between the (fixed length) outer contact 404 and the guide portion 662, thereby causing an increasing displacement of the inner contact 402 of the blade 432 along the first direction 408 as the blade pivots (and increasing compression of the compliant member). The reaction force F exerted by the guide portion 662 on the second end 434 of the blade is greater than the reaction force from compression of the compliant member 406, and therefore the disconnector blade retracts.

The insulating guide portion 662 can be further configured to cause the disconnector blade to move from the compressed state to the extended state as the disconnector blade pivots from the second position to the third position. In this example, a section 662b of the guide portion is shaped to gradually increase the distance between the (fixed length) outer contact 404 and the guide portion 662, thereby allowing the inner contact 402 of the blade 432 to slide in a direction opposite the first direction 408 as the blade pivots in response to the biasing or urging of the compliant member 406 (and extension of the compliant member). The reaction force F exerted by the guide portion 662 on the second end 434 of the blade is less than the urging force from compression of the compliant member 406, and therefore the disconnector blade extends.

The use of one or more insulating or isolating features such as the insulating support 500 may improve electrical safety during the isolation, second, position by improving dielectric performance. In particular, the insulating support 500 can help to reduce field end effects at the second end 334 of the disconnector blade 332 and provide a dielectrically better performance compared to a high electric field in air. The insulating support 500 be provided individually, or in combination with one or more other insulating features (including features not described herein).

In some examples, an insulating sheet 550 may be provided. The insulating sheet 550 can be formed from any suitable insulating material. The insulating sheet 550 need not contact the second end 434 of the disconnector blade 432 when the blade is in the second position. The presence of the insulating sheet 550, even without physical contact, acts as an obstruction to breakdown electrical current paths and can help avoid dielectric failure, thereby improving dielectric performance.

The use of the insulating support 500 and/or the insulating sheet 550 on the second side wall 216b of the housing / enclosure facilitates use of a three-position disconnector and earthing switch 330 within a compact device footprint. A more compact, reliable device may therefore be provided by use of the insulating features provided herein.

In the example of Figure 6B, the disconnector and earthing switch 330 comprises two disconnector blades 434, disposed either side of the second actuating mechanism 348. In other words, each disconnector and earthing switch can comprise two or more telescopic disconnector blades. By using two disconnector blades, two parallel paths are created for current flow. This can help to improve thermal performance. In such implementations, two guide portions 662 are also provided; one guide portion is provided for each disconnector blade. However, it will be understood that other arrangements are possible. For example, a single telescopic blade can be provided. In such an implementation, the size/shape of the contacts in the on / off /earth positions can be implemented as e.g. a Jaw contact to facilitate good electrical connection between the blade and the contacts.

The disconnector blade can be operated or actuated by operation of the second actuating mechanism 348. However, as described above, in this example the disconnector blade will be operated by the second actuating mechanism only when the switching mechanism is open. In other words, the actuating mechanisms are interlocked such a way that the disconnector and earthing switch or 3PS can be operated only when the switching mechanism (such as the VCB) is in the open state. In this example, the second actuating mechanism is implemented as a four-bar crank rocker mechanism (i.e., the telescopic disconnector blade is operated by a four-bar crank rocker mechanism).

In some examples, an electrical contact 664 is coupled the insulating support 500 and configured to contact the second end(s) 434 of the disconnector blade(s) 432 when the disconnector blade(s) are in the second position. When two disconnector blades are provided, the electrical contact 664 is configured to be disposed between the second ends 434 of the respective blades 432. The electrical contact 664 is disposed between the two guide portions 662. The electrical contact 664 can comprise a partially spherical end. The use of a spherical (i.e., curved) portion at the second end of the electrical contact 664 acts to reduce or avoid high fields at the electrical contact 664. Dielectric performance may therefore be further improved.

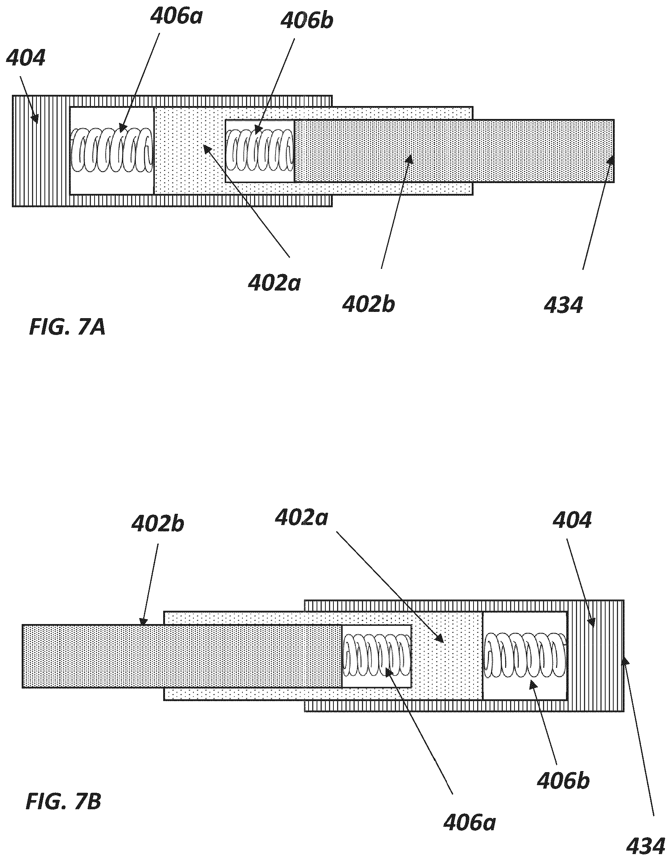

In the examples described herein, the telescopic contact or blade of the disconnector and earthing switch 330 comprises two contacts, one moveable relative to the other. However, in other implementations there may be more than two moveable contacts, as is illustrated in Figure 7A. In this example, there are two inner contacts 402a, 402b, and an outer contact 404. The inner contacts 402a, 402b are configured to slide relative to each other and relative to the outer contact to provide the telescopic blade 432. Two compliant members 406a, 406b may be provided to facilitate the return of the telescopic blade 432 to the extended state (of e.g. Figure 4A). The compliant members can be disposed in respective guide holes. In some other examples, more than two inner contacts and corresponding compliant members may be provided.

In another example implementation, shown in Figure 7B, the inner and outer contacts may be arranged in an alternate manner to form a telescopic blade 432. The outer contact 404 comprises the second end 334, 434 of the disconnector blade (the free end, or tip).

The inner contact 402b comprises the first end 342, 442 of the disconnector blade (the end around which the disconnector blade is configured to pivot. In this arrangement, the outer contact slides over the inner contacts (rather than the inner contact(s) sliding into the outer contacts, as in Figure 4 and Figure 7A).

## Claims

1. A device (100, 200) comprising:
one or more switching mechanisms (110) configured to disconnect a power supply from a load;
one or more disconnector and earthing switches (330), each disconnector and earthing switch associated with a respective switching mechanism, each disconnector and earthing switch comprising a telescopic disconnector blade (332, 432) having a first end (342, 442) and a second end (334, 434),
wherein the disconnector blade is configured to pivot around the first end between three different positions, the three positions comprising:
a first position in which the disconnector and earthing switch is closed and the power supply is connected to the load through the disconnector blade;
a second, isolation, position in which the disconnector and earthing switch is open and the power supply is disconnected from the load; and
a third position in which the power supply is disconnected from the load and a second end of the disconnector blade is electrically connected to an earthing contact (336); and **characterised by**
a housing (216) having first (216a) and second (216b) side walls, wherein the telescopic disconnector blade is configured to rotate around the pivot from the first position to the second position, wherein the rotation is towards the second side wall of the housing,
wherein the second side wall comprises an insulating support (500) configured to contact, when the disconnector blade is in the second position, the second end of said disconnector blade.

2. The device of claim 1, wherein the telescopic disconnector blade comprises an outer contact (404) and an inner contact (402), a portion of the inner contact arranged to slide within the outer contact.

3. The device of claim 2, wherein the outer contact comprises the first end of the disconnector blade and the inner contact comprises the second end of the disconnector blade.

4. The device of claim 2 or claim 3, wherein the outer contact comprises a guide hole and the inner contact slides within the guide hole,
the disconnector blade further comprising a compliant member (406) disposed within the guide hole and configured to bias the inner contact out of the guide hole.

5. The device of claim 4, wherein, in response to an external force applied in a first direction (408) and to the second end of the disconnector blade, the inner contact is configured to slide in the first direction within the guide hole of the outer contact and the compliant member is configured to bias the inner contact in a direction opposite the first direction.

6. The device of claim 4 or claim 5, wherein the compliant member is a compression spring.

7. The device of any preceding claim, wherein the telescopic disconnector blade is configured to move between an extended state and a compressed state,
wherein the disconnector blade is in the extended state in the first position and the third position, and wherein the disconnector blade is in the compressed state in the second position.

8. The device of any preceding claim, wherein the insulating support comprises a guide portion (662) configured to cause the disconnector blade to move from the extended state to the compressed state as the disconnector blade pivots from the first position to the second position.

9. The device of claim 8, wherein the guide portion is further configured to cause the disconnector blade to move from the compressed state to the extended state as the disconnector blade pivots from the second position to the third position.

10. The device of any of any preceding claim, further comprising an electrical contact (664) coupled to the insulating support, the electrical contact configured to contact the second end of the disconnector blade when the disconnector blade is in the second position.

11. The device of claim 10, wherein the electrical contact comprises a partially spherical end configured to contact the second end of the disconnector blade when the disconnector blade is in the second position.

12. The device of any preceding claim, wherein each disconnector and earthing switch comprises two or more telescopic disconnector blades.

13. The device of any preceding claim, comprising:
a plurality of switching devices, each switching device comprising a plurality of poles, wherein each pole is associated with a respective switching mechanism of the one or more switching mechanisms and a respective disconnector and earthing switch of the one or more disconnector and earthing switches.

## Patentansprüche

1. Vorrichtung (100, 200), umfassend:
einen oder mehrere Schaltmechanismen (110), die so konfiguriert sind, dass sie eine Stromversorgung von einer Last trennen;
einen oder mehrere Trennschalter und Erdungsschalter (330), wobei jeder Trennschalter und Erdungsschalter einem jeweiligen Schaltmechanismus zugeordnet ist und jeder Trennschalter und Erdungsschalter eine teleskopische Trennklinge (332, 432) mit einem ersten Ende (342, 442) und einem zweiten Ende (334, 434) aufweist,
wobei die Trennklinge so konfiguriert ist, dass sie um das erste Ende zwischen drei verschiedenen Positionen schwenkt, wobei die drei Positionen Folgendes umfassen:
eine erste Position, in der der Trennschalter und Erdungsschalter geschlossen ist und die Stromversorgung über die Trennklinge mit der Last verbunden ist;
eine zweite, isolierte Position, in der der Trennschalter und Erdungsschalter geöffnet ist und die Stromversorgung von der Last getrennt ist; und
eine dritte Position, in der die Stromversorgung von der Last getrennt ist und ein zweites Ende der Trennklinge elektrisch mit einem Erdungskontakt (336) verbunden ist; und **gekennzeichnet durch**
ein Gehäuse (216) mit einer ersten (216a) und zweiten (216b) Seitenwand, wobei die teleskopische Trennklinge so konfiguriert ist, dass sie sich um den Drehpunkt von der ersten Position in die zweite Position dreht, wobei die Drehung in Richtung der zweiten Seitenwand des Gehäuses erfolgt,
wobei die zweite Seitenwand einen isolierenden Träger (500) umfasst, der so konfiguriert ist, dass er, wenn sich die Trennklinge in der zweiten Position befindet, mit dem zweiten Ende der Trennklinge in Berührung kommt.

2. Vorrichtung nach Anspruch 1, wobei die teleskopische Trennklinge einen äußeren Kontakt (404) und einen inneren Kontakt (402) umfasst, wobei ein Teil des inneren Kontakts so angeordnet ist, dass er innerhalb des äußeren Kontakts gleiten kann.

3. Vorrichtung nach Anspruch 2, wobei der äußere Kontakt das erste Ende der Trennklinge umfasst und der innere Kontakt das zweite Ende der Trennklinge umfasst.

4. Vorrichtung nach Anspruch 2 oder Anspruch 3, wobei der äußere Kontakt eine Führungsbohrung umfasst und der innere Kontakt innerhalb der Führungsbohrung gleitet,
wobei die Trennklinge ferner ein nachgiebiges Element (406) umfasst, das innerhalb der Führungsbohrung angeordnet und so konfiguriert ist, dass es den inneren Kontakt aus der Führungsbohrung heraus vorspannt.

5. Vorrichtung nach Anspruch 4, wobei der innere Kontakt als Reaktion auf eine in einer ersten Richtung (408) und auf das zweite Ende der Trennklinge angewendete äußere Kraft so konfiguriert ist, dass er in der ersten Richtung innerhalb der Führungsbohrung des äußeren Kontakts gleitet, und das nachgiebige Element so konfiguriert ist, dass es den inneren Kontakt in einer zur ersten Richtung entgegengesetzten Richtung vorspannt.

6. Vorrichtung nach Anspruch 4 oder Anspruch 5, wobei das nachgiebige Element eine Druckfeder ist.

7. Vorrichtung nach einem der vorstehenden Ansprüche, wobei die teleskopische Trennklinge so konfiguriert ist, dass sie sich zwischen einem ausgefahrenen Zustand und einem zusammengedrückten Zustand bewegt,
wobei sich die Trennklinge in der ersten Position und der dritten Position im ausgefahrenen Zustand befindet und wobei sich die Trennklinge in der zweiten Position im zusammengedrückten Zustand befindet.

8. Vorrichtung nach einem der vorstehenden Ansprüche, wobei die isolierende Halterung einen Führungsabschnitt (662) umfasst, der so konfiguriert ist, dass er bewirkt, dass sich die Trennklinge vom ausgefahrenen Zustand in den zusammengedrückten Zustand bewegt, wenn die Trennklinge von der ersten Position in die zweite Position schwenkt.

9. Vorrichtung nach Anspruch 8, wobei der Führungsabschnitt ferner so konfiguriert ist, dass er bewirkt, dass sich die Trennklinge aus dem zusammengedrückten Zustand in den ausgefahrenen Zustand bewegt, wenn die Trennklinge aus der zweiten Position in die dritte Position schwenkt.

10. Vorrichtung nach einem der vorstehenden Ansprüche, die ferner einen elektrischen Kontakt (664) umfasst, der mit dem isolierenden Träger gekoppelt ist, wobei der elektrische Kontakt so konfiguriert ist, dass er mit dem zweiten Ende der Trennklinge in Berührung kommt, wenn sich die Trennklinge in der zweiten Position befindet.

11. Vorrichtung nach Anspruch 10, wobei der elektrische Kontakt ein teilweise kugelförmiges Ende umfasst, das so konfiguriert ist, dass es mit dem zweiten Ende der Trennklinge in Berührung kommt, wenn sich die Trennklinge in der zweiten Position befindet.

12. Vorrichtung nach einem der vorstehenden Ansprüche, wobei jeder Trennschalter und Erdungsschalter zwei oder mehr teleskopische Trennklingen umfasst.

13. Vorrichtung nach einem der vorstehenden Ansprüche, umfassend:
eine Vielzahl von Schaltvorrichtungen, wobei jede Schaltvorrichtung eine Vielzahl von Polen umfasst, wobei jeder Pol einem jeweiligen Schaltmechanismus der einen oder mehreren Schaltmechanismen und einem jeweiligen Trennschalter und Erdungsschalter der einen oder mehreren Trennschalter und Erdungsschalter assoziiert ist.

## Revendications

1. Dispositif (100 ; 200) comprenant :
un ou plusieurs mécanismes de commutation (110) conçus pour déconnecter une alimentation électrique d'une charge ;
un ou plusieurs sectionneurs et interrupteurs de mise à la terre (330), chaque sectionneur et interrupteur de mise à la terre étant associé à un mécanisme de commutation respectif, chaque sectionneur et interrupteur de mise à la terre comprenant une lame de sectionneur télescopique (332, 432) ayant une première extrémité (342, 442) et une seconde extrémité (334, 434),
dans lequel la lame de sectionneur est conçue pour pivoter autour de la première extrémité entre trois positions différentes, les trois positions comprenant :
une première position dans laquelle le sectionneur et interrupteur de mise à la terre est fermé et l'alimentation électrique est connectée à la charge par l'intermédiaire de la lame de sectionneur ;
une deuxième position d'isolement dans laquelle le sectionneur et interrupteur de mise à la terre est ouvert et l'alimentation électrique est déconnectée de la charge ; et
une troisième position dans laquelle l'alimentation électrique est déconnectée de la charge et une seconde extrémité de la lame de sectionneur est connectée électriquement à un contact de mise à la terre (336) ; et **caractérisé par**
un boîtier (216) ayant des première (216a) et seconde (216b) parois latérales, dans lequel la lame de sectionneur télescopique est conçue pour tourner autour du pivot de la première position à la deuxième position, dans lequel la rotation s'effectue en direction de la seconde paroi latérale du boîtier,
dans lequel la seconde paroi latérale comprend un support isolant (500) conçu pour entrer en contact, lorsque la lame de sectionneur est dans la deuxième position, avec la seconde extrémité de ladite lame de sectionneur.

2. Dispositif selon la revendication 1, dans lequel la lame de sectionneur télescopique comprend un contact extérieur (404) et un contact intérieur (402), une partie du contact intérieur étant agencée pour coulisser à l'intérieur du contact extérieur.

3. Dispositif selon la revendication 2, dans lequel le contact extérieur comprend la première extrémité de la lame de sectionneur et le contact intérieur comprend la seconde extrémité de la lame de sectionneur.

4. Dispositif selon la revendication 2 ou la revendication 3, dans lequel le contact extérieur comprend un trou de guidage et le contact intérieur coulisse à l'intérieur du trou de guidage,
la lame de sectionneur comprenant en outre un élément souple (406) disposé au sein du trou de guidage et conçu pour solliciter le contact intérieur hors du trou de guidage.

5. Dispositif selon la revendication 4, dans lequel, en réponse à une force externe appliquée dans une première direction (408) et à la seconde extrémité de la lame de sectionneur, le contact intérieur est conçu pour coulisser dans la première direction à l'intérieur du trou de guidage du contact extérieur et l'élément souple est conçu pour solliciter le contact intérieur dans une direction opposée à la première direction.

6. Dispositif selon la revendication 4 ou la revendication 5, dans lequel l'élément souple est un ressort de compression.

7. Dispositif selon une quelconque revendication précédente, dans lequel la lame de sectionneur télescopique est conçue pour se déplacer entre un état déployé et un état comprimé,
dans lequel la lame de sectionneur est à l'état déployé dans la première position et la troisième position, et dans lequel la lame de sectionneur est à l'état comprimé dans la deuxième position.

8. Dispositif selon une quelconque revendication précédente, dans lequel le support isolant comprend une partie de guidage (662) conçue pour amener la lame de sectionneur à se déplacer de l'état déployé à l'état comprimé lorsque la lame de sectionneur pivote de la première position à la deuxième position.

9. Dispositif selon la revendication 8, dans lequel la partie de guidage est en outre conçue pour amener la lame de sectionneur à se déplacer de l'état comprimé à l'état déployé lorsque la lame de sectionneur pivote de la deuxième position à la troisième position.

10. Dispositif selon une quelconque revendication précédente, comprenant en outre un contact électrique (664) couplé au support isolant, le contact électrique étant conçu pour entrer en contact avec la seconde extrémité de la lame de sectionneur lorsque la lame de sectionneur est dans la deuxième position.

11. Dispositif selon la revendication 10, dans lequel le contact électrique comprend une extrémité partiellement sphérique conçue pour entrer en contact avec la seconde extrémité de la lame de sectionneur lorsque la lame de sectionneur est dans la deuxième position.

12. Dispositif selon une quelconque revendication précédente, dans lequel chaque sectionneur et interrupteur de mise à la terre comprend deux lames de sectionneur télescopiques ou plus.

13. Dispositif selon une quelconque revendication précédente, comprenant :
une pluralité de dispositifs de commutation, chaque dispositif de commutation comprenant une pluralité de pôles, dans lequel chaque pôle est associé à un mécanisme de commutation respectif parmi le ou les mécanismes de commutation et à un sectionneur et interrupteur de mise à la terre respectif parmi le ou les sectionneurs et interrupteurs de mise à la terre.
